# Europäisches Patentamt
# European Patent Office
# Office européen des brevets

(19)

(11) Numéro de publication: **0 115 765**
**B1**

(12) # FASCICULE DE BREVET EUROPÉEN

(45) Date de publication du fascicule du brevet:
**22.07.87**

(51) Int. Cl.⁴: **G 02 B 26/08,** G 02 B 26/02

(21) Numéro de dépôt: **84100028.4**

(22) Date de dépôt: **03.01.84**

(54) **Commutateur pour circuit à guide de lumière.**

(30) Priorité: **07.01.83 FR 8300194**

(43) Date de publication de la demande:
**15.08.84 Bulletin 84/33**

(45) Mention de la délivrance du brevet:
**22.07.87 Bulletin 87/30**

(84) Etats contractants désignés:
**BE DE FR GB IT LU NL**

(56) Documents cité:
**US-A-3 389 950**
**US-A-3 401 232**
**US-A-4 304 460**

(73) Titulaire: **ALCATEL CIT, 33, rue Emeriau, F-75015 Paris (FR)**

(72) Inventeur: **Boirat, Robert, La Bruyère Roinville, F-91410 Dourdan (FR)**

(74) Mandataire: **Weinmiller, Jürgen, Lennéstrasse 9 Postfach 24, D-8133 Feldafing (DE)**

LIBER, STOCKHOLM 1987

EP 0 115 765 B1

## Description

L'invention concerne un commutateur pour circuit à guide de lumière.

De manière générale un tel commutateur est destiné à coupler une extrémité, par exemple l'extrémité avant d'un guide de lumière appelé ci-après commun à un élément optique pouvant être choisi dans un ensemble de plusieurs tels éléments appelés ci-après particuliers. On supposera pour faciliter l'exposé que ce commutateur est plus particulièrement utilisé pour diriger la lumière issue de ce guide commun vers cet élément particulier. Mais il doit être compris qu'en vertu du principe de parcours inverse de la lumière, le commutateur qui dirige cette lumière vers cet élément particulier injecterait tout aussi bien dans le même guide une lumière issue de cet élément particulier.

Quant aux éléments optiques particuliers mentionnés, ils peuvent être par exemple constitués par des détecteurs, mais ils sont en fait, le plus souvent des systèmes d'injection de lumière dans des fibres optiques particulières, de même que le guide commun est le plus souvent constitué par une fibre optique commune.

Un tel commutateur comporte, de manière connue,

- un moyen de collimation pour transformer un faisceau sortant de l'extrémité avant du guide commun avec une forte divergence en un faisceau extérieur de section transversale agrandie,

- et un moyen de déviation commandable pour dévier ce faisceau de manière à le diriger vers l'élément particulier choisi.

Bien entendu ledit moyen de collimation devient un moyen de focalisation ou d'injection de lumière, si on considére de la lumière se dirigeant vers le guide commun.

Un tel commutateur connu est décrit dans le document US-A 4 304 450 (Tanaka et autres, Assignors to Matsushita).

Ce commutateur connu comporte un moyen de collimation constitué par une lentille et un moyen de déviation constitué par un miroir tournant.

Un tel commutateur permet par exemple à un utilisateur de choisir le programme qui l'intéresse parmi divers programmes de télévision qui lui sont transmis par diverses fibres optiques.

Compte tenu des très petites dimensions transversales des fibres optiques utilisées, ce commutateur connu est soit d'un encombrement important par rapport à celui des fibres, soit d'une réalisation difficice si on veut éviter autant que possible des pertes de lumière. La position du miroir tournant doit, en particulier être définie avec précision à la fois par rapport à la lentille de collimation et par rapport auxdits éléments particuliers.

La présente invention a pour but la réalisation d'un commutateur pour circuit à guide de lumière d'une fabrication simplifiée et ne provoquant que ds faibles pertes de lumière.

Elle a pour objet un commutateur du genre précédemment mentionné, et caractérisé par le fait que lesdits moyens de collimation et de déviation comportent un bloc transparent disposé en avant de ladite extrémité du guide commun et comprenant une partie arrière et une partie avant, cette partie arrière constituant un guide tronconique et ayant la forme d'un tronc de cône de révolution présentant un axe de symetrie et s'étendent entre une petite base et une grande base situées dans deux plans prependiculaires à cet axe de symetrie, la petite base constituant une face arrière de ce bloc et étant en regard de ladite extrémité du guide commun et l'axe de symetrie étant disposé dans le prolongement de l'axe de guide commun de manière à assurer un couplage entre ce dernier et ce guide tronconique, la surface latérale conique de guide étant revêtue d'une gaine transparente d'indice plus faible de manière à réfléchir la lumière dudit faisceau fortement divergent provenant du guide commun et à transformer ce faisceau en un faisceau presque parallèle traversant la grande base du tronc de cône, la partie avant de ce bloc transparant continuant la partie arrière, au-delà de la grande base dudit guide tronconique de sorte que cette grande base est virtuelle, cette partie avant formant un prisme déviateur dont une première face principale est constituée par cette grande base et dont l'autre face principale inclinée sur la première constitue une face avant principale de ce bloc en regard de laquelle est disposé ledit ensemble d'éléments optique particuliers, ce commutateur comportant en outre des moyens de rotation dudit bloc transparent autour de l'axe de symétre dudit tronc de cône de manière à permettre de commander le moyen de déviation constitué par la partie avant de ce bloc sans affecter le fonctionnement du moyen de collimation constitué par la partie arrière de ce même bloc.

A l'aide des figures schematiques ci-jointes on va décrire ci-après, à titre non limitatif, comment l'invention peut être mise en oeuvre.

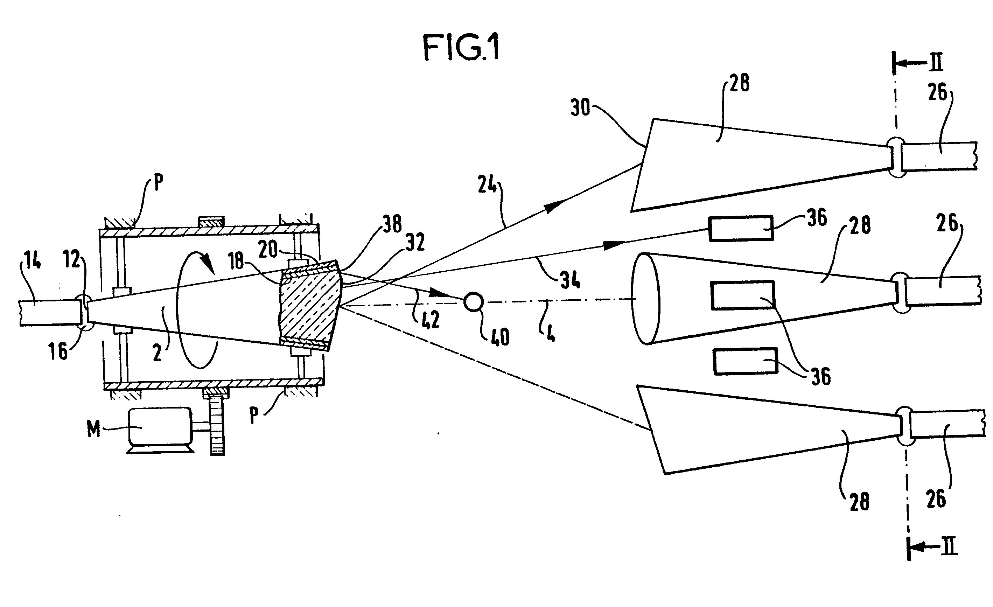

La figure 1 représente une vue d'un commutateur selon l'invention en coupe par un plan I-I de la figure 2 passant par l'axe du commutateur.

La figure 2 représente une vue de ce même commutateur en coupe par un plan II-II de la figure 1 perpendiculaire à l'axe du commutateur.

La figure 3 représente une vue du seul bloc transparent du même commutateur en coupe par le plan I-I, sans hachures, pour illustrer la frontière virtuelle entre les parties avant et arrière de ce bloc.

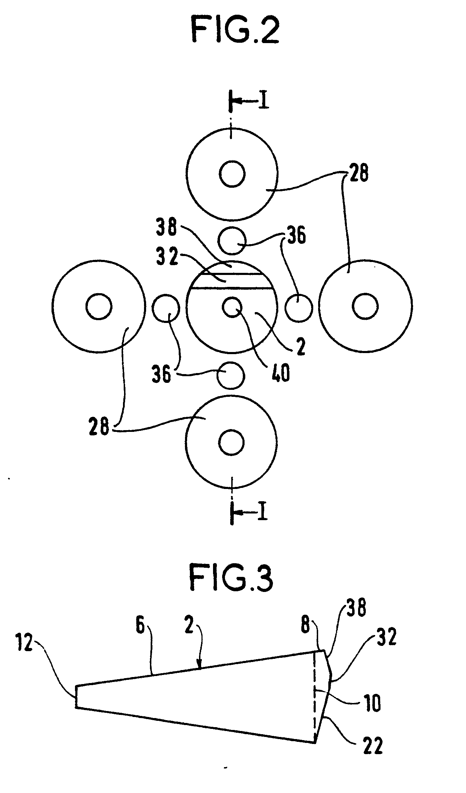

Conformément à ces figures le commutateur comporte un bloc transparent homogène 2, constitué de verre ou de silice dopée, et dont la forme générale est celle d'un tronc de cône de révolution autour d'un axe longitudinal 4 avec à l'arrière une petite base 12 perpendiculaire à l'axe 4 et à l'avant une grande base elliptique inclinée. Quoiqu'il n'y ait aucune frontière physique à l'intérieur de ce bloc il peut être considéré comme constitué d'une partie arrière 6 et d'une partie avant 8 séparée par une surface 10 (Voir figure 3).

La partie arrière 6 constitue l'âme d'un guide de lumière tronconique. Sa forme est celle d'un tronc du même cône de révolution que précédemment avec la même petite base 12, mais avec une grande base constituée par la surface 10 qui est parallèle à la petite base. Cette dernière présente sensiblement le même diamètre que le coeur d'une fibre optique commune 14 et elle est disposée en regard et à proximité de l'extrémité avant de cette fibre, dont l'axe coïncide avec l'axe 4. L'indice optique du bloc 2 est sensiblement égal à celui du coeur de cette fibre et une goutte 16 de liquide de même indice remplit l'intervalle entre l'extrémité de la fibre et cette petite base.

La surface latérale conique de cette partie arrière est revêtue d'une gaine transparente 18 d'indice plus faible que celui du bloc 2 pour constituer une surface réfléchissante assurant le guidage de la lumière dans le guide ainsi constitué. La forme conique de cette surface réfléchissante diminue progressivement, par réflexions successives sous fortes incidences, l'inclinaison sur l'axe des rayons lumineux issus de la fibre commune. De préférence une deuxième gaine 20 d'indice plus fort que celui de la gaine 18 entoure la première pour éviter la réflexion sous faible incidence de rayons lumineux parasites pénétrant dans le tronc de cône par sa grande base. En pratique ces gaines s'étendent non seulement sur la partie arrière mais sur la totalité de la surface latérale conique du bloc transparent 2, comme représenté.

La partie avant 8 du bloc 2 consstiue un prisme déviateur dont une face principale est la grande base virtuelle 10 de la partie arrière et dont l'autre face principale constitue une face avant "principale" 22 du bloc 2.

Ce bloc est par ailleurs muni de moyens de rotation autour le son axe de manière que le faisceau lumineux longitudinal arrivant sur cette autre face principale 22 en sorte dévié en 24 selon une direction qui balaie un cône de révolution autour de l'axe 4. Ces moyens comportent des paliers P et un moteur d'entraînement M. Les faibles dimensions du bloc permettent de le loger dans un volume axial intérieur au moteur d'entraînement, qui est du type pas à pas. Cependant, pour faciliter la compréhension du dessin cette disposition n'est pas représentée.

Le faisceau extérieur 24 sortant par la face avant pricipale 22 peut être appelé "principal". Il est reçu par un dit "élément optique particulier" constitué par un système optique d'injection de lumière dans une fibre "particulière" telle que 26 parallèle à la fibre commune.

Ce système d'injection est constitué par un bloc tronconique 28 présentant toutes les caractéristiques précédemment décrites à propos du bloc 2, sauf qu'il est fixe. Ce bloc 28 est couplé à la fibre 26 de la même manière que le bloc 2 à la fibre 14. L'inclinaison de sa face avant 30 est choisie pour assurer l'injection de la lumière du faisceau principal 24 dans la fibre 26 lorsque ce faisceau est dirigé sur cette face.

Dans l'exemple décrit il y a quatre fibres particulières telles que 26 munies chacune des mêmes éléments annexes tels que le système d'injection 28 et réparties angulairement à 90° les unes des autres autour de l'axe 4. Mais en pratique on a intérêt le plus souvent à prévoir un nombre de fibres particulières beaucoup plus grand, par exepple 24 ou 25.

Il peut y avoir intérêt à assurer automatiquement un positionnement angulaire précis du bloc 2 autour de l'axe 4 lorsqu'on veut par exemple injecter dans la fibre 25 la lumière qui provient de la fibre 14, ou, plus généralement du guide commun.

C'est pourquoi, de préférence, le bloc transparent 2 comporte en outre dans sa partie avant 8 une facette d'asservissement 32 affectée d'un mouvement d'ensemble par la rotation de ce bloc. Cette facette forme, avec de la lumière provenant du guide commun, un faisceau d'asservissement mobile 34 éclairant successivement chacun des détecteurs d'asservissement 36 d'un ensemble de tels détecteurs sensibles à cette lumière. Ces détecteurs sont disposés à distance de l'axe de rotation 4 et décalés de 90°. Ils commandent le moteur de rotation M pour asservir la position angulaire de ce bloc à la position assurant le couplage optique souhaité. Cette commande se fait par un circuit d'asservissement non représenté.

Il peut aussi y avoir intérêt à pouvoir commander à distance la position angulaire du bloc 2, par l'intermédiaire du guide commun.

C'est pourquoi, de préférence, le bloc transparent 2 comporte encore, dans sa partie avant 8, une facette de commande 38 orientée perpendiculairement au plan passant par son centre et l'axe de rotation 4 de manière à former, avec de la lumière provenant du guide commun 14, un faisceau de commande susceptible d'éclairer un détecteur de commande 40 placé sur cet axe. Ceci permet à ce détecteur de recevoir à travers ce bloc et indépendamment de la position angulaire de celui-ci, un faisceau de commande 42 permettant de commander le moteur de rotation M pour amener ce bloc dans la position angulaire assurant le couplage optique souhaité. Là encore la commande se fait par un circuit non représenté.

Le fonctionnement du commutateur ainsi équipé est alors le suivant: Un signal de commande et un signal d'asservissement sont injectés en un point de la fibre commune en amont de son extrémité avant.

Le signal de commande est transporté par le faisceau de commande avec d'autres signaux et arrive quelle que soit la position angulaire du bloc 2, sur le détecteur 40, qui n'est sensible qu'à ce signal au moins dans le cas considéré où le faisceau principal se propage dans le même sens que le faisceau de commande.

5       **0 115 765**       6

Le signal d'asservissement peut être le même à quelques différences près, telles que l'adresse, que le signal de commande. Il est porté avec d'autre signaux par le faisceau d'asservissement. Il n'est reçu par un détecteur d'asservissement choisi 36, sensible à ce seul signal, que lorsque la position angulaire est bonne ou presque bonne.

Le signal de commande provoque une rotation du bloc 2 jusqu'à ce que le détecteur d'asservissement correspondant à la position recherchée soit éclairé, et le circuit d'asservissement prend alors le relais pour régler finement la position et la fixer.

Enfin un signal de bon positionnement est envoyé par le détecteur d'asservissement pour mettre fin au signal d'asservissement.

Bien entendu les fonctions des détecteurs 36 et 40 peuvent rester inchangées si la lumière du faisceau extérieur principal 24 est dirigée vers le bloc 2.

De préférence, et comme représenté, la face avant principale 22 entoure l'axe de rotation 4, et chaque facette 32, 38 a une aire plus petite et est formée à distance de cet axe en tordure de cette face principale 22.

De préférence encore les facettes 32 et 38 sont disposées du coté ou se trouve la plus longue génératrice du tronc de cône.

Ces deux dernières dispositions limitent les pertes de lumière provoquées sur le faisceau extérieur principal par la présence de ces facettes.

La ou les facettes 32, 38 peuvent être formées en taillant le bloc 2, ou lors d'une fabrication de ce bloc par moulage.

En pratique on utilisera deux facettes contiguës pour faciliter leur réalisation.

On sait réaliser un bloc tel que le bloc 2 par un étirage contrôlé d'une "grosse fibre" (deux matériaux d'indices différents) convenablement chauffée.

La coupe est faite du petit côté, comme celle d'une fibre, à un endroit choisi pour que le diamètre soit correct.

Le polissage de la grande base 22 et des facettes 32 et 38 relève des techniques optiques habituelles.

Dans le cas d'une fibre commune présentant un diamètre de coeur de 50 micromètres et fournissant un faisceau de demi-angle au sommet de 10° environ, si l'on désire un faisceau collimaté de demi-angle au sommet voisin et inférieur à 1°, on réalise un cône en matériaux identiques à ceux de la fibre, avec un angle au sommet voisin de 1°, une longueur un peu supérieure à 25 mm (et un diamètre d'entrée de 50 micromètres). Une inclinaison de 25° de la face de sortie causera une déviation du faisceau de l'ordre de 13°.

**Revendications**

1. Commutateur pour circuit à guide de lumière, ce commutateur étant destiné à coupler une extrémité avant d'un guide commun (14) à un élément optique donné dit particulier (28) pouvant être choisi dans un ensemble de plusieurs éléments particuliers, et notamment à diriger la lumière issue de ce guide commun vers cet élément particulier, ce commutateur comportant

- un moyen de collimation pour transformer un faisceau sortant de l'extrémité avant du guide commun avec une forte divergence en un faisceau extérieur de section transversale agrandie,

- et un moyen de déviation commandable pour dévier ce faisceau de manière à le diriger vers ledit élément particulier choisi,

- ce commutateur étant caractérisé par le fait que lesdits moyens de collimation et de déviation comportent un bloc transparent (2) disposé en avant de ladite extrémité du guide commun (14) et comprenant une partie arrière (6) et une partie avant (8),

- cette partie arrière (6) constituant un guide tronconique et ayant la forme d'un tronc de cône de révolution présentant un axe de symétrie (4) et s'étendant entre une petite base (12) et une grande base (10) situées dans deux plans perpendiculaires à cet axe de symétrie, la petite base constituant une face arrière de ce bloc et étant en regard de ladite extrémité du guide commun (14) et l'axe de symétrie étant disposé dans le prolongement de l'axe de ce guide commun de manière à assurer un couplage entre ce dernier et ce guide tronconique, la surface latérale conique de guide étant revêtue d'une gaine transparente (18) d'indice plus faible que celui du bloc transparent (2) de manière à réfléchir la lumière dudit faisceau fortement divergent proveiant du guide commun et à transformer ce faisceau en un faisceau presque parallèle traversant la grande base du tronc de cône,

- la partie avant (8) de ce bloc transparent continuant la partie arrière, au-delà de la grande base dudit guide tronconique de sorte que cette grande base est virtuelle, cette partie avant formant un prisme déviateur dont une première face principale est constituée par cette grande base (10) et dont l'autre face principale inclinée sur la première constitue une face avant principale de ce bloc, en regard de laquelle est disposé ledit ensemble d'elements optiques particuliers (28),

- ce commutateur comportant en outre des moyens de rotation (M) dudit bloc transparent autour de l'axe de symétrie dudit tronc de cône de manière à permettre de commander le moyen de déviation constitué par la partie avant de ce bloc sans affecter le fonctionnement du moyen de collimation constitué par la partie arrière de ce même bloc.

2. Commutateur selon la revendication 1, caractérisé par le fait que la surface latérale conique dudit guide tronconique (6) est revêtue d'une gaine transparente supplémentaire extérieure (20) d'indice plus élevé que celui de ladite gaine transparente (18) pour éviter des réflexions parasites sous faible incidence sur cette surface latérale.

3. Commutateur selon la revendication 1, caractérisé par le fait que ledit bloc transparent (2) comporte en outre dans sa partie avant (8) une facette d'asservissement (32) affectée du même mouvement de rotation que le bloc de manière à former avec de la lumière provenant du guide commun un faisceau d'asserivissement mobile (34) susceptible d'éclairer successivement chacun des détecteurs d'asservissement (36) d'un ensemble de tels détecteurs sensibles à cette lumière, disposés à distance dudit axe de rotation (4), et commandant lesdits moyens ce rotation (M) pour asservir la position angulaire de ce bloc à une position choisie.

4. Commetatuer selon la revendication 1, caractérisé par le fait que ledit bloc transparent (2) comporte en outre, dans sa partie avant (8), une facette de commande (38) orientée perpendiculairement au plan passant par son centre et ledit axe de rotation (4) de manière à former avec de la lumière provenant du guide commun (14), un faisceau de commande susceptible l'éclairer un détecteur de commande (40) placé sur cet axe de rotation pour recevoir à travers ce bloc et indépendamment de la position angulaire de celui-ci un faisceau de commande (42) commandant lesdits moyens de rotation (M) de manière à amener ce bloc dans une position angulaire choisie.

5. Commutateur selon les revendications 3 ou 4, caractérisé par le fait que ladite face avant principale (22) entoure ledit axe de rotation (4), chaque dite facette (32, 38) ayant une aire plus petite et étant formée à distance de cet axe en bordure de cette face principale (22).

6. Commutateur selon la revendication 5, caractérisé par le fait que chaque dite facette (32, 38) est formée du coté où se trouve les plus longues génératrices du tronc de cône constituant ledit bloc transparent (2).

**Patentansprüche**

1. Schalter für einen Lichtleiterkreis zur Kopplung eines Vorderendes eines gemeinsamen Lichtleiters (14) mit einem gegebenen optischen Element (28), besonderes Element genannt, das aus einer Gruppe von mehreren besonderen Elementen ausgewählt werden kann, und insbesondere zur Weiterleitung des vom gemeinsamen Lichtleiter ausgehenden Lichts in Richtung auf dieses besondere Element, wobei der Schalter aufweist:
- ein Sammelmittel, um einen mit großer Streuung vom Vorderende des gemeinsamen Lichtleiters ausgehenden Strahl in einen äußeren Strahl mit größerem Querschnitt umzuwandeln,
- und ein steuerbares Ablenkmittel, um dieses Strahl abzulenken, so daß er auf das ausgewählte besondere Element gerichtet wird,
- dadurch gekennzeichnet, daß das Sammelmittel und das Ablenkmittel einen transparenten Block (2) aufweisen, der vor dem Ende des gemeinsamen Leiters (14) liegt und ein hinteres (6) und ein vorderes Teil (8) besitzt,
- wobei das vordere Teil (6) einen kegelstumpfförmigen Lichtleiter bildet und die Form eines drehsymmetrischen Kegelstumpfs mit einer Symmetrieachse (4) besitzt und sich von einer kleinen Basis (12) bis zu einer großen Basis (10) erstreckt, die in senkrecht zu dieser Symmetrieachse liegenden Ebenen verlaufen, wobei die kleine Basis eine Rückseite des Blocks bildet und dem Ende des gemeinsamen Lichtleiters (14) gegenüberliegt und die Symmetrieachse in der Verlängerung der Achse dieses gemeinsamen Lichtleiters liegt, so daß eine Kopplung zwischen diesem Lichtleiter und dem kegelstumpfförmigen Lichtleiter erfolgt, wobei die konische seitliche Oberfläche dieses Lichtleiters von einer transparenten Hülle (18) eines niedrigeren Brechungsindex als der des transparenten Blocks (2) bedeckt ist, so daß das Licht des vom gemeinsamen Lichtleiter kommenden stark divergierenden Bündels dort reflektiert wird und der Strahl in einen nahezu parallelen Strahl umgewandelt wird, der die große Basis des Kegelstumpfs durchquert,
- wobei das vordere Teil (8) dieses transparenten Blocks sich an das hintere Teil jenseits der großen Basis des kegelstumpfförmigen Lichtleiters anschließt, so daß diese große Basis nur eine virtuelle ist, wobei das vordere Teil ein Ablenkprisma bildet, dessen erste Hauptseite durch diese große Basis (10) gebildet wird und dessen andere Hauptseite, die zur ersten geneigt ist, eine vordere Hauptseite dieses Blocks bildet, der gegenüber die Gruppe von besonderen optischen Elementen (28) angeordnet ist,
- wobei der Schalter außerdem Mittel (M) besitzt, um den transparenten Block um die Symmetrieachse des Kegelstumpfs zu drehen, so daß es möglich wird, das Ablenkmittel, das vom vorderen Teil dieses Blocks gebildet wird, zu steuern, ohne das Sammelmittel, das vom hinteren Teil dieses selben Blocks gebildet wird, zu beeinflussen.

2. Schalter nach Anspruch 1, dadurch gekennzeichnet, daß die seitliche konische Oberfläche des kegelstumpfförmigen Lichtleiters (6) von einer zusätzlichen äußeren transparenten Hülle (20) eines höheren Brechungsindex als der der transparenten Hülle (18) umgeben ist, um Störreflexionen unter einem kleinen Einfallswinkel bezüglich dieser seitlichen Oberfläche zu vermeiden.

3. Schalter nach Anspruch 1, dadurch gekennzeichnet, daß der transparente Block (2) außerdem in seinem vorderen Teil (8) eine Regelfacette (32) besitzt, die derselben Drehbewegung wie der Block unterliegt, so daß sie mit vom gemeinsamen Lichtleiter kommendem Licht einen beweglichen Regelstrahl (34) erzeugt, der geeignet ist, nacheinander je einen der Regeldetektoren (36) aus einer Gruppe solcher Detektoren zu beleuchten, die für dieses Licht empfänglich sind und in einem Abstand von der Drehachse (4) angeordnet sind sowie die Drehmittel (M) steuern, um die Winkelposition des Blocks auf eine gewünschte Position nachzuregeln.

4. Schalter nach Anspruch 1, dadurch gekennzeichnet, daß der transparente Block (2) außerdem in seinem vorderen Teil (8) eine Steuerfacette (38) aufweist, die senkrecht zu der durch sein Zentrum und die Drehachse (4) verlaufenden Ebene ausgerichtet ist, so daß sie mit vom gemeinsamen Lichtleiter (14) kommendem Licht ein Steuerlichtbündel bildet, das in der Lage ist, einen auf der Rotationsachse liegenden Steuerdetektor (40) zu beleuchten, damit dieser durch den Block hindurch und unabhängig von dessen Winkelposition einen Steuerstrahl (42) empfängt, der die Drehmittel (M) so steuert, daß der Block in eine wählbare Winkelstellung gelangt.

5. Schalter nach Anspruch 3 oder 4, dadurch gekennzeichnet, daß die vordere Hauptseite (22) die Drehachse (4) umgibt und jede der Facetten (32, 38) einen kleineren Bereich überdeckt und am Rand dieser Hauptseite (22) und von der Achse entfernt ausgebildet ist.

6. Schalter nach Anspruch 5, dadurch gekennzeichnet, daß jede Facette (32, 38) auf der Seite ausgebildet ist, auf der sich die längeren Mantellinien des den transparenten Block (2) bildenden Kegelstumpfs befinden.

**Claims**

1. A switch for a light guide circuit, this switch being intended to couple a front end of a common guide (14) to a given optical element, called particular element (28), which can be selected from a set of several particular elements, and in particular to direct light leaving this common guide towards said particular element, said switch comprising:
- a collimator means for transforming a highly divergent beam leaving the front end of the common guide into an outer beam of increased transversal cross-section,
- and a controllable deflector means for deflecting this beam, to direct it towards said selected particular element,
- this switch being characterized in that said collimator and deflector means comprise a transparent block (2) disposed in front of said common guide (14) and including a rear portion (6) and a front portion (8),
- this rear portion (6) constituting a frusto conical guide and having the form of a truncated cone with an axis of rotational symmetry (4), this truncated cone extending between a small base (12) and a large base (10) situated in two planes perpendicular to this axis of symmetry, the small base constituting a rear face for that block and being disposed facing said end of the common guide (14), the axis of symmetry being disposed in line with the axis of said common guide in such a manner as to couple the common guide to the frusto conical guide, the conical side surface of this guide being covered with a transparent cladding of lower refractive index than that of the transparent block (2) in such a manner as to reflect the light of said highly divergent beam leaving the common guide and to transform this beam into a nearly parallel beam passing through the large base of the truncated cone,
- the front portion (8) of this transparent block constituting a continuation of the rear portion beyond the large base of said frusto conical guide, thus rendering the large base a virtual base, this front portion forming a deflection prism, one first main face of which is constituted by this large base (10), whereas the other main base which is inclined with respect to the first one, forms a main front face of this block, said set of particular optical elements (28) being disposed in face-to-face relationship with said main front face,
- this switch further including means (M) for rotating said transparent block about the axis of symmetry of said truncated cone in such a manner as to control the deflection means constituted by the front portion of this block without affecting the operation of said collimator means constituted by the rear portion of this same block.

2. A switch according to claim 1, characterized in that the conical side surface of said frusto conical guide (6) is covered with an extra transparent outer cladding (20) of higher refractive index than that of the transparent cladding (18) in order to avoid parasitic reflections at low angles of incidence on this side surface.

3. A switch according to claim 1, characterized in that said transparent block (2) further comprises in its front portion (8) a servo facet (32) which is affected by the same rotational mouvement as the block in such a manner as to form a moving servo beam (34) with light coming from said common guide, this beam being suitable to successively illuminate every servo detector (36) out of a set of such detectors sensitive to such light, said detectors being disposed at a distance from said axis of rotation (4) and controlling said rotation means (M) to approach the angular position of this block to a selected position.

4. A switch according to claim 1, characterized in that said transparent block (2) further comprises in its front portion (8) a control facet (38) oriented perpendicularly to a plane passing through its center and said axis of rotation (4) in such a manner as to form a control beam with light from said common guide (14), this beam being suitable to illuminate a control detector (40) placed on said axis of rotation to receive via this block and independently of the angular position thereof, a control beam (42) controlling said rotation means (M) in such a manner as to bring said block into a selected angular position.

5. A switch according to claims 3 or 4, characterized in that said main front face (22) surrounds said axis of rotation (4), each facet (32, 38) being of a smaller area and being formed at a distance from said axis at the margin of said main face (22).

6. A switch according to claim 5, characterized in that each facet (32, 38) is formed on the side of the longer generatrix lines of the truncated cone constituting said transparent block (2).

# FIG.1

# FIG.2

⊢I

28

38
32

36

2

36

40

28

⊢I

# FIG.3

12    6    2    8    38    32    10    22